# EUROPEAN PATENT SPECIFICATION

(11) **EP 1 096 171 B1**
(45) Date of publication and mention of the grant of the patent: **02.02.2005**
(21) Application number: 00830473.5
(22) Date of filing: 05.07.2000
(51) Int. Cl.: F16F 9/512, F16F 9/46, F16F 9/06

(54) **A self-regulating cushioned pneumatic suspension for vehicles and the relative shock absorber**
Selbstregelnde und gedämpfte, pneumatische Fahrzeugaufhängung und Stossdämpfer hierzu
Suspension autorégulée, amortie et pneumatique pour véhicule et amortisseur correspondant

(30) Priority: 29.10.1999 IT BO990582
(43) Date of publication of application: 02.05.2001
(73) Proprietor: SEBAC ITALIA S.r.l., 56025 Pontedera (Pisa) (IT)
(72) Inventor: Benizzi, Giovanni, 40141 Bologna (IT)
(74) Representative: Lanzoni, Luciano

(56) References cited:
- EP-A- 0 066 154
- DE-A- 2 757 711
- DE-A- 3 309 042
- DE-A- 3 309 077
- DE-C- 4 103 356
- US-A- 1 562 879
- US-A- 3 146 862

## Description

The present invention relates to the construction of suspensions for vehicles and in particular a suspension and relative self-regulating shock absorber, particularly suitable for industrial vehicles or buses.

In vehicles which run on wheels, the connection between the rolling part and the suspended part of the vehicle must allow elastic deformation in a direction almost perpendicular to the support surface, but must be substantially rigid in the directions parallel with said surface. Springs are used to make this connection elastic, some types of which consist in particular of deformable hollow bodies, containing compressed air, called air or diapress springs.

In the specific case in which air springs are used for buses or industrial vehicles, in order to obtain a vehicle driving position which is practically invariable irrespective of the load carried, there is a pneumatic circuit with a levelling valve which controls the air pressure in the air spring in such a way as to compensate when the spring gives due to the various loads supported by the suspension. This pneumatic circuit normally controls suspensions by operating according to variations in load from empty to full of around 10 times.

Since the suspension components cannot normally produce adequate natural damping of the suspension dynamic oscillations around the static equilibrium position, the above-mentioned suspensions are equipped with auxiliary devices, called shock absorbers, which adequately brake the motion of the axle or wheel relative to the chassis. The frequency of the suspension oscillations, which is around 60 - 80 oscillations per minute, makes the use of hydraulic shock absorbers indispensable.

A first type of said hydraulic shock absorbers, normally used, generally has two elements - a damper piston and a cylinder - which delimit two chambers with variable volume between them. The chambers are interconnected by a pipe, fitted with reed valves, passing through the damper piston and contain oil, which during the relative motion of the two elements caused by oscillation of the suspension, passes from one chamber to other. All of this constitutes a substantial fluid braking system.

Shock absorbers of this type carry out braking irrespective of the vehicle load (fixed braking). Therefore, to make the suspension more reliable in the various dynamic conditions, such shock absorbers are selected in such a way as to achieve maximum vehicle stability when it is fully loaded, and so that they are not too rigid when the vehicle is empty. However, this is achieved as the result of a compromise which involves the loss of a certain level of comfort in the suspension.

Although this type of shock absorber is widely used, in the case of pneumatic suspensions it is very disadvantageous and compromising, since the main feature of such types of suspensions is comfort.

In the document US-3 146 862 is disclosed a remote controlled fluid-shock-absorber for vehicle which comprises a hollow piston rod with a slide valve member arranged therein. The slide valve member a opens bores of different diameter or a slot arranged axially on the piston rod in such a way to obtain a variable cross section for the passage of oil and a variable damping effect. The slide valve member is actuated by a pressure medium which is dependent on the vehicle speed. For example the slide valve member of the shock absorber can be operatively connected with the shifting arrangement of an automatic vehicle transmission.

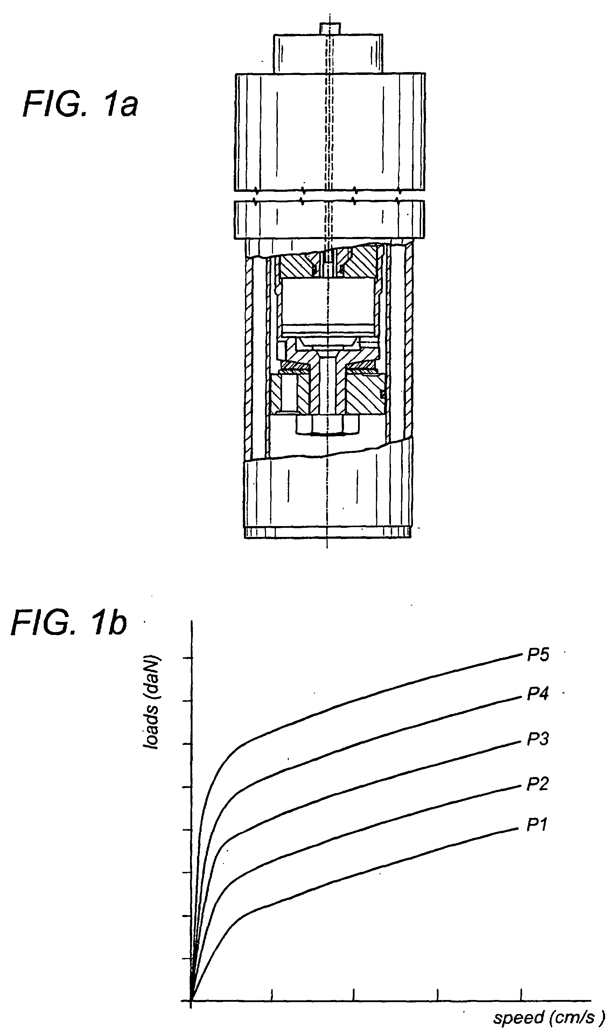

The prior art also includes references to shock absorbers which have a transfer pipe running parallel with the pipe which passes through the damper piston. The transfer pipe interacts with a plug controlled from the outside by pneumatic pressure. An example of this type of shock absorber is illustrated in Figure 1a of the accompanying drawings. All shock absorbers of this type are capable of braking curves which have a characteristic trend which is of fixed geometric shape and invariable and which can be grouped into families of curves, all geometrically similar, varying parametrically according to the air pressure applied to the plug. An example of such curves is indicated in Figure 1b.

Obviously, the trend of the individual braking curves, the pressure level at which the braking conditions are satisfied and the extension of the pressure ranges in which the shock absorber functions change each time according to other variables including, for example, the nature of the various applications for which it was designed or the climatic conditions in which the suspension is used.

Solutions arising from this second type have the disadvantage of having mechanically complex construction elements controlling the transfer, making the shock absorber expensive to produce. The construction elements are also extremely sensitive to repeated shaking of the suspension during vehicle use. During use of the suspension, such shaking is inevitably produced at high revolutions and quite rapidly compromises the reliability and working life of the shock absorber.

The aim of the present invention is to overcome the disadvantages typical of suspensions and relative shock absorbers of the known type, by providing a pneumatic suspension in which a shock absorber automatically regulates the hydraulic action according to the pressure in the air spring, with simple construction, being reliable and safe.

Accordingly, this aim is fulfilled by a shock absorber as claimed in claim 1.

Since the ports may be shaped and combined in many different ways, they can create transit sections which vary in their geometry, size, position relative to the plug. A further advantage of the present invention is the possibility of allowing the practical creation, with the greatest possible freedom of design, of shock absorbers whose individual braking curves can vary and be modulated in terms of both their trend and level relative to the pressure of the air spring.

Moreover, if the transfer ports are shaped in such a way that they are angled transversally to the direction of motion of the plug, any oscillations in the pressure of the fluid in transit, caused by dynamic shaking of the suspension, do not have any effect on the plug. The plug remains immobile and unaffected in the position set at the time of loading and unloading with the vehicle stopped.

This characteristic is a great advantage, since it guarantees prolonged, reliable shock absorber operation without requiring that its parts be subjected to special treatments and/or processing to extend their life during construction.

A further characteristic of the present invention is the fact that the transfer ports, the transfer pipe and the plug can be completely fitted in conventional fixed-braking shock absorber rod. This is extremely advantageous in terms of economy of construction, since the present invention may be produced economically and with few changes to the conventional production cycles.

Further features of the present invention, in accordance with the above-mentioned aims, are clearly indicated in the claims herein and the advantages are more clearly described in the detailed description below, with reference to the accompanying drawings, in which:
- Figures 1a and 1b are respectively a cross-section of a known shock absorber and an example of a graph indicating a type of braking curve;
- Figure 2 is a cross-section of a shock absorber as a whole in accordance with the present invention;
- Figure 3 is a scaled-up detail of the shock absorber illustrated in Figure 2;
- Figure 4 is an example, without limiting the scope of the present invention, of the braking curves which can be obtained with a shock absorber made in accordance with the present invention.

With reference to the accompanying drawings, a self-regulating shock absorber for a pneumatic suspension for industrial vehicles or buses is labelled 2 as a whole. The suspension is of the type comprising an air spring supplied with air whose pressure is controlled by suitable control means according to changes in the load on the vehicle. Said control means, whose structure and operation is completely known, and which are therefore not illustrated like the air spring, interact with a "levelling valve", controlling the air pressure in the air spring and adjusting it as is appropriate to the intensity of the loads on the vehicles.

The shock absorber 2, of the hydraulic type, basically comprises a piston 3, on a rod 15, and a cylinder 4 attached to the piston 3 in such a way that together they delimit two separate chambers 5a, 5b, which contain the hydraulic fluid.

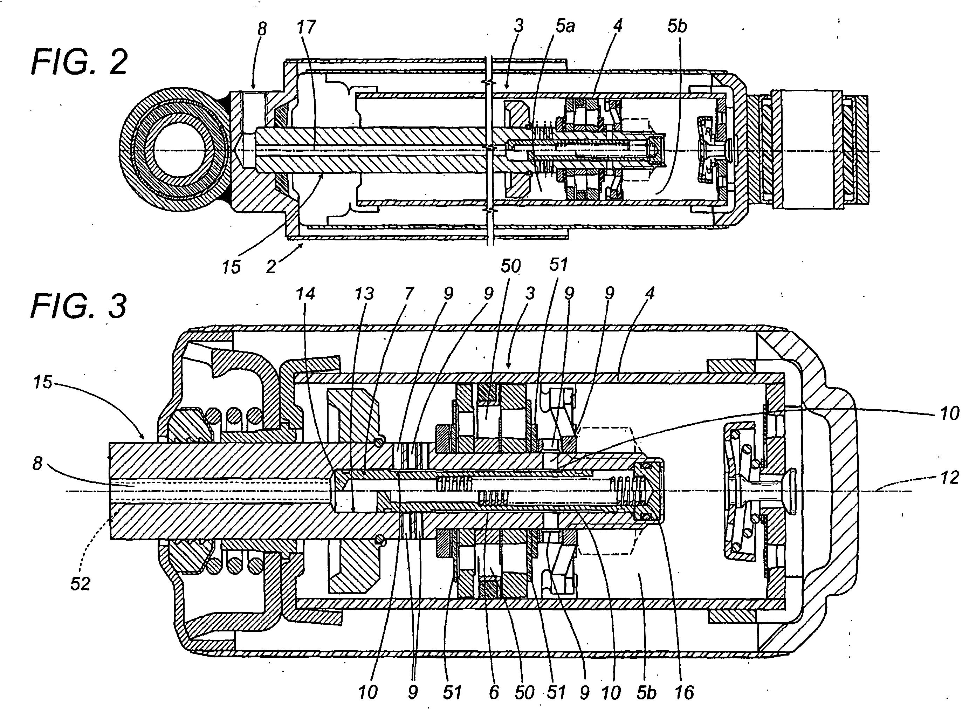

The piston 3 has a conventional structure and, as illustrated in Figures 2 and 3 in the accompanying drawings, pipes 50 with reed damper valves 51 pass through the piston.

The chambers 5a, 5b intercommunicate by means of the pipes 50 in the piston 3 and by means of a transfer pipe, labelled 6 as a whole, which is connected to the chambers 5a and 5b by relative ports 9 and which is intercepted in a way that can be modulated by a mobile plug 7.

More specifically - as illustrated in Figures 2 and 3 - the plug 7 has an elongated cylindrical body 14 and is contained coaxially, internally and in such a way that it slides and forms an air-tight seal, in the rod 15 and in a matching cylindrical guide 13 made in the rod 15.

Between the cylindrical body 14 of the plug 7 and the guide 13 coaxial with it, there is the transfer pipe 6 which is ring-shaped and is made in the piston 3 rod 15.

The plug 7 is subject to two opposing forces generated on one side by a control pressure 8 and on the other by the elastic reaction to said force produced by a counteracting spring 16.

The control pressure 8 is the actual pressure of the air in the air spring (diapress). The control pressure is conducted to the plug 7 by a pipe 17, part of which is made in the rod 15.

The instantaneous position of the plug 7 along the rod 15 is, therefore, controlled by the actual pressure of the air spring, that is to say the operating pressure established by the load levelling valve.

As illustrated in Figure 3, the ports 9 connected to the transfer pipe 6 are made through the rod 15, in positions which allow them to be affected in succession by the plug 7 movements.

The ports 9 and plug 7 together and depending on the positions of the plug 7 along the guide 13, delimit transit sections 10 for the fluid passing between one chamber 5a and the other 5b. The sections generally vary according to the air pressure 8 in the air spring. Therefore, by changing the shape, size, relative position of the ports 9 and plug 7, it is possible to modulate in many different ways the flow of the oil between the two chamber 5a, 5b through the transfer pipe 6 and to produce braking of the suspension shaking, around its static equilibrium position, in accordance with characteristic curves 11 with the most diverse shapes and, in general, different shapes between the various levels of pressure which are created in the air spring.

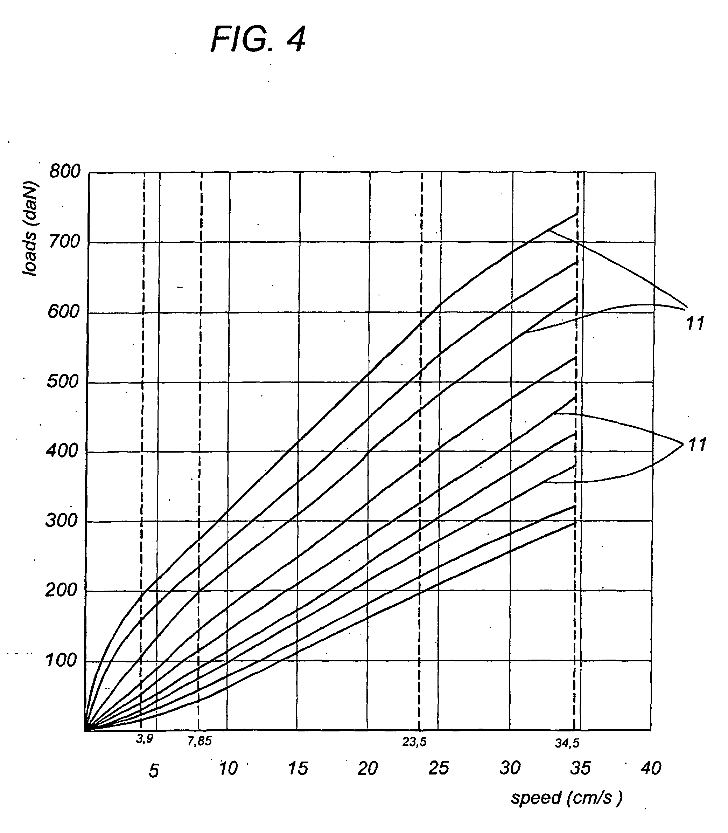

This possibility of freely designing the curve characteristic of the braking according to families of curves, illustrated by way of example but without limiting the scope of the present invention, in Figure 4, may be implemented in many ways. For example, by dividing the total transit section 10 of the transfer pipe 6 into several partial inlet or outlet sections at small intervals along the rod 15 (Figure 3). The ports 9 may also be altered, changing the number, position, shape and size of the individual ports, as well as the relative distances separating each one from the next and from the current position of the plug 7 according to the control pressure 8 value.

As regards the angle of the transfer ports 9 relative to the direction 12 of motion of the plug, Figures 2 and 3 clearly illustrate that, if the ports 9 are angled so that they are perpendicular to the direction 12 of motion of the plug 7, oscillations in the pressure 8 caused by shaking of the suspension, and within the range of tolerance allowed for a preset air spring nominal pressure value, do not affect the plug 7, which resists said shaking and remains immobile in the position set at the moment of loading/unloading the vehicle with the vehicle stopped.

The structure of the plug 7, therefore, gives it a long working life when subjected to low intensity static stresses. Moreover, the compactness of the plug 7 and its ability to rapidly intercept the transfer ports 9 give the shock absorber 2 a rapid, precise response to all air spring pressure settings.

The suspension and relative shock absorber which form the subject matter of the present invention fulfil the afore-mentioned aims thanks to three basic advantageous aspects, which may be summarised as follows.

A first aspect is the possibility of obtaining real-time variations in the transfer conditions relative to the actual air spring pressure.

A second aspect is the possibility of modulating the braking characteristics 11 to each actual air spring pressure value.

A third aspect is the fact that the "sensitive part" which covers the hydraulic braking control, and which consists of the plug 7, is not subject to the dynamic strokes of the suspension.

All of this implies that it is possible to obtain: the maximum stability/comfort ratio for any load conditions (first and second basic aspects); maximum reliability and working life of the vehicle on the road (third basic aspect); and minimum additional cost of the shock absorber made in accordance with the present invention relative to a conventional shock absorber for pneumatic suspensions.

The invention described can be used for obvious industrial applications. It can be subject to numerous modifications and variations without thereby departing from the scope of the inventive concept. Moreover, all the details of the invention may be substituted by technically equivalent elements.

Some variations may be identified in the embodiment of the plug 7 drive means. Plug 7 activation, by means of a control pressure 8 linked to or coinciding with the air pressure in the air spring, is a preferred solution, but not the only solution, for drive means sensitive to a control action outside the shock absorber 2.

Alternatively, an uncompressible hydraulic fluid may be used, carried to the plug 7 by the piston 3 rod 15 and allowing an equivalent possibility of varying the position of the plug 7 in the guide 13. Another embodiment of the drive means may be obtained by controlling plug 7 movements in the guide 13 using a shaft 52 housed in the rod 15 to push the plug 7 against the spring 16 reaction as and when necessary.

Even the shaft 52 drive may have further embodiments, since the shaft 52 may be moved, for example, by a mechanical drive or an electric drive.

In the examples of the invention described, reference is made to a control action performed directly by the air pressure 8 of the air spring, or, in any case, linked to this pressure. This must not be seen as limiting the scope of the invention, since the shock absorber 2 may be independent of the air spring.

From the descriptions and illustrations, it is evident that the shock absorber 2 may be advantageously applied in all cases in which it is necessary or useful to vary the characteristic behaviour and performance of the shock absorber according to several specific external parameters of the actual application in which the shock absorber 2 is used.

## Claims

1. An adjustable shock absorber for vehicle suspensions, said suspensions including at least an air spring, the shock absorber comprising a piston (3), through which at least one pipe passes, said pipe being fitted with reed valves, and a cylinder (4) connected to the piston (3) in such a way that together they delimit two separate fluid chambers (5a, 5b), said chambers intercommunicating through the piston (3) and a transfer pipe (6), the latter being intercepted by a plug (7) which moves upon operation of drive means sensitive to an external control action, whereby the transfer pipe (6) is connected to the chambers (5a, 5b) by at least two ports (9), the ports being positioned, relative to the transfer pipe (6), in such a way that they are covered by the plug (7), said plug (7) interacting with the ports (9) in such a way that together they delimit fluid transit sections (10) for the fluid passing between one chamber (5a) and the other (5b) through the transfer pipe (6), the sections being variable depending on the control pressure (8), the shock absorber being **characterised in that** the control pressure (8) which controls the position of the plug (7) is the actual pressure of the air spring, that is to say the operating pressure established by the load levelling valve controlling the air pressure in the air spring and adjusting it as is appropriate to the intensity of the loads on the vehicles.

2. The shock absorber according to claim 1, **characterised in that** the transfer ports (9) are arranged and sized in such a way as to allow transfer flows corresponding to a family of characteristic curves (11), each individual curve having a different trend to the others.

3. The shock absorber according to claim 1, **characterised in that** the transfer ports (9) are shaped in such a way as to create transit sections (10), varying by discrete quantities.

4. The shock absorber according to claim 1, **characterised in that** the transfer ports (9) are angled transversally to the direction of motion (12) of the plug (7).

5. The shock absorber according to any of the foregoing claims from 1 to 4, **characterised in that** the transfer ports (9) have different transit sections (10).

6. The shock absorber according claim 5, **characterised in that** the transit sections (10) have different shapes.

7. The shock absorber according claim 5, **characterised in that** the transfer ports (9) are of different sizes.

8. The shock absorber according claim 5, **characterised in that** the transfer ports (9) are separated by variable distances.

9. The shock absorber according to one of the foregoing claims from 1 to 8, **characterised in that** the transfer ports (9) are connected at least to one transfer pipe (6) in the plug (7).

10. The shock absorber according to one of the foregoing claims from 1 to 9, **characterised in that** the plug (7) has an elongated body (14) which is contained in, and connected to a matching guide (13), coaxially in such a way that it slides and forms an airtight seal.

11. The shock absorber according to claim 10, **characterised in that** the elongated body (14) and matching guide (13) are cylindrical.

12. The shock absorber according to claim 10, **characterised in that** the transfer pipe (6) or pipes are located between the elongated body (14) and the guide (13).

13. The shock absorber according to one of the foregoing claims from 1 to 12, in which the piston (3) is mounted on a support rod (15), the shock absorber being **characterised in that** the ports (9), transfer pipes (6) and plug (7) are incorporated in the piston (3) rod (15).

14. The shock absorber according to claim 1, **characterised in that** the plug (7) drive means are constituted by an air pressure (8).

15. The shock absorber according to claim 13, **characterised in that** the drive means are constituted by a hydraulic fluid supplied to the plug (7) through the rod (15) on which the piston (3) is mounted.

16. The shock absorber according to claim 13, **characterised in that** the drive means are constituted by a shaft (52) housed in the rod (15), being moved in such a way as to control the plug (7) and vary its position.

17. The shock absorber according to claim 16, **characterised in that** the shaft (52) is moved by a mechanical drive.

18. The shock absorber according to claim 16, **characterised in that** the shaft (52) is moved by an electric drive.

19. A pneumatic suspension for vehicles comprising an air spring supplied with compressed air (8); a fluid shock absorber (2) according to claim 1, **characterised in that** the reed valves are damper valves (51) and **in that** the control pressure (8) is variable depending on the air pressure (8) in the air spring.

20. The suspension according to claim 19, **characterised in that** the transfer ports (9) are arranged and sized in such a way as to allow, at the various pressure (8) values, transfer flows corresponding to a family of characteristic curves (11), each individual curve having a different shape from the others.

21. The suspension according to claim 19 or 20, **characterised in that** the ports (9) are shaped in such a way as to create transit sections (10) for fluid transfer, varying by discrete quantities.

22. The suspension according to claim 19, **characterised in that** the transfer ports (9) are angled transversally to the direction of motion (12) of the plug (7).

23. The suspension according to one of the foregoing claims from 19 to 22, **characterised in that** the transfer ports (9) have different transit sections (10).

24. The suspension according to claim 23, **characterised in that** the transit sections (10) have different shapes.

25. The suspension according to claim 23, **characterised in that** the transit sections (10) are of different sizes.

26. The suspension according to claim 22, **characterised in that** the transfer ports (9) are separated by variable distances.

27. The suspension according to one of the foregoing claims from 19 to 26, **characterised in that** the transfer ports (9) are connected at least to one transfer pipe (6) in the plug (7).

28. The suspension according to one of the foregoing claims from 19 to 27, **characterised in that** the plug (7) has an elongated body (14) contained in and attached to a matching guide (13) in such a way that the plug slides in and forms an airtight seal with the guide.

29. The suspension according to claim 28, **characterised in that** the elongated body (14) and the guide (13) are cylindrical.

30. The suspension according to claim 27, **characterised in that** the transfer pipe (6) or pipes are located between the elongated body (14) and the guide (13).

31. The suspension according to one of the foregoing claims from 19 to 30, in which the piston (3) is mounted on a support rod (15), the suspension being **characterised in that** the ports (9), transfer pipes (6) and plug (7) are incorporated in the piston (3) rod (15).

32. The suspension according to claim 19, **characterised in that** the plug (7) drive means are constituted by the air pressure (8) in the air spring.

33. The suspension according to claim 31, **characterised in that** the drive means are constituted by a hydraulic fluid supplied to the plug (7) through the rod (15) on which the piston (3) is mounted.

34. The suspension according to claim 31, **characterised in that** the drive means are constituted by a shaft (52) housed in the piston (3) rod (15), being moved in such a way as to control the plug (7) and vary its position.

35. The suspension according to claim 34, **characterised in that** the shaft (52) is moved by a mechanical drive.

36. The suspension according to claim 34, **characterised in that** the shaft (52) is moved by an electric drive.

## Patentansprüche

1. Ein regelbarer Stossdämpfer für Fahrzeugaufhängungen, wobei die genannten Aufhängungen wenigstens eine pneumatische Feder enthalten, und wobei der Stossdämpfer einen Kolben (3) enthält, durch welchen wenigstens eine Leitung verläuft, wobei die genannte Leitung mit Überströmventilen versehen ist, und einen auf solche Weise mit dem Kolben (3) verbundenen Zylinder (4), dass sie zusammen zwei getrennte Flüssigkeitskammer (5a, 5b) beschreiben, wobei die genannten Kammern durch den Kolben (3) und eine Durchlaufleitung (6) miteinander in Verbindung stehen, letztere abgesperrt durch einen Verschluss (7), welcher sich auf die Betätigung von Antriebsmitteln bewegt, die auf eine Steuerwirkung von aussen her reagieren, wobei die Durchlaufleitung (6) an die Kammern (5a, 5b) wenigstens durch zwei Öffnungen (9) angeschlossen ist, positioniert im Verhältnis zu der Durchlaufleitung (6) auf solche Weise, dass sie durch den Verschluss (7) abgedeckt sind, wobei der genannte Verschluss (7) auf solche Weise mit den Öffnungen (9) zusammenwirkt, dass sie zusammen die Durchlaufabschnitte (10) für die Flüssigkeit zwischen einer Kammer (5a) und der anderen (5b) durch die Durchlaufleitung (6) begrenzen, wobei die Abschnitte abhängig von dem Steuerdruck (8) veränderbar sind, und wobei der Stossdämpfer **dadurch gekennzeichnet ist, dass** der Steuerdruck (8), welcher die Position des Verschlusses (7) steuert, der augenblickliche Druck der pneumatischen Feder ist, das heisst der Betriebsdruck, der durch das Ladeausgleichsventil festgelegt ist, welches den Luftdruck in der pneumatischen Feder regelt und ihn entsprechend der Ladeintensität an den Fahrzeugen einstellt.

2. Stossdämpfer nach Patentanspruch 1, **dadurch gekennzeichnet, dass** die Durchlassöffnungen (9) auf solche Weise angeordnet und bemessen sind, dass sie es den Durchlaufströmungen erlauben, einer Gruppe von typischen Kurven (11) zu entsprechen, wobei jede einzelne Kurve einen unterschiedlichen Verlauf von den anderen hat.

3. Stossdämpfer nach Patentanspruch 1, **dadurch gekennzeichnet, dass** die Durchlassöffnungen (9) auf solche Weise geformt sind, dass sie Durchlaufabschnitte (10) bilden, die sich um diskrete Mengen verändern.

4. Stossdämpfer nach Patentanspruch 1, **dadurch gekennzeichnet, dass** die Durchlassöffnungen (9) quer zu der Bewegungsrichtung (12) des Verschlusses (7) angewinkelt sind.

5. Stossdämpfer nach einem beliebigen der vorstehenden Patentansprüche von 1 bis 4, **dadurch gekennzeichnet, dass** die Durchlassöffnungen (9) unterschiedliche Durchlaufabschnitte (10) haben.

6. Stossdämpfer nach Patentanspruch 5, **dadurch gekennzeichnet, dass** die Durchlaufabschnitte (10) unterschiedliche Formen haben.

7. Stossdämpfer nach Patentanspruch 5, **dadurch gekennzeichnet, dass** die Durchlassöffnungen (9) unterschiedliche Grössen haben.

8. Stossdämpfer nach Patentanspruch 5, **dadurch gekennzeichnet, dass** die Durchlassöffnungen (9) durch unterschiedliche Abstände voneinander getrennt sind.

9. Stossdämpfer nach einem der vorstehenden Patentansprüche von 1 bis 8, **dadurch gekennzeichnet, dass** die Durchlassöffnungen (9) an wenigstens eine Durchlaufleitung (6) in dem Verschluss (7) angeschlossen sind.

10. Stossdämpfer nach einem der vorstehenden Patentansprüche von 1 bis 9, **dadurch gekennzeichnet, dass** der Verschluss (7) einen länglichen Körper (14) hat, welcher in einer passrechten Führung (13) enthalten und mit dieser koaxial verbunden ist, und zwar auf solche Weise, dass er gleitet und eine luftabdichtende Dichtung bildet.

11. Stossdämpfer nach Patentanspruch 10, **dadurch gekennzeichnet, dass** der längliche Körper (14) und die passrechte Führung (13) zylindrisch sind.

12. Stossdämpfer nach Patentanspruch 10, **dadurch gekennzeichnet, dass** die Durchlaufleitung (6) oder die Leitungen zwischen dem länglichen Körper (14) und der Führung (13) angeordnet sind.

13. Stossdämpfer nach einem der vorstehenden Patentansprüche von 1 bis 12, bei welchem der Kolben (3) an einem Trägerschaft (15) montiert ist, wobei der Stossdämpfer **dadurch gekennzeichnet ist, dass** die Öffnungen (9), die Durchlaufleitungen (6) und der Verschluss (7) in den Schaft (15) des Kolbens (3) eingearbeitet sind.

14. Stossdämpfer nach Patentanspruch 1, **dadurch gekennzeichnet, dass** die Antriebsmittel des Verschlusses (7) durch einen Luftdruck (8) gebildet sind.

15. Stossdämpfer nach Patentanspruch 13, **dadurch gekennzeichnet, dass** die Antriebsmittel aus einer hydraulischen Flüssigkeit bestehen, zugeführt an den Verschluss (7) durch den Schaft (15), an welchem der Kolben (3) montiert ist.

16. Stossdämpfer nach Patentanspruch 13, **dadurch gekennzeichnet, dass** die Antriebsmittel aus einer in dem Schaft (15) liegenden Welle (52) bestehen, wobei diese auf solche Weise bewegt wird, dass sie den Verschluss (7) betätigt und dessen Position verändert.

17. Stossdämpfer nach Patentanspruch 16, **dadurch gekennzeichnet, dass** die Welle (52) durch einen mechanischen Antrieb bewegt wird.

18. Stossdämpfer nach Patentanspruch 16, **dadurch gekennzeichnet, dass** die Welle (52) durch einen elektrischen Antrieb bewegt wird.

19. Pneumatische Aufhängung für Fahrzeuge, enthaltend eine mit Druckluft (8) gespeiste pneumatische Feder; einen Flüssigkeits-Stossdämpfer (2) nach Patentanspruch 1, **dadurch gekennzeichnet, dass** die Überströmventile Dämpferventile (51) sind, und dadurch, dass der Steuerdruck (8) veränderbar ist, abhängig von dem Luftdruck (8) in der pneumatischen Feder.

20. Aufhängung nach Patentanspruch 19, **dadurch gekennzeichnet, dass** die Durchlassöffnungen (9) auf solche Weise angeordnet und bemessen sind, dass sie bei verschiedenen Werten des Druckes (8) Durchlaufströmungen entsprechend einer Gruppe von typischen Kurven (11) erlauben, wobei jede einzelne Kurve einen unterschiedlichen Verlauf von den anderen hat.

21. Aufhängung nach Patentanspruch 19 oder 20, **dadurch gekennzeichnet, dass** die Öffnungen (9) auf solche Weise geformt sind, dass sie Durchlaufabschnitte (10) für den Flüssigkeitsdurchlauf bilden, die sich um diskrete Mengen verändern.

22. Aufhängung nach Patentanspruch 19, **dadurch gekennzeichnet, dass** die Durchlassöffnungen (9) quer zu der Bewegungsrichtung (12) des Verschlusses (7) angewinkelt sind.

23. Aufhängung nach einem der vorstehenden Patentansprüche von 19 bis 22, **dadurch gekennzeichnet, dass** die Durchlassöffnungen (9) unterschiedliche Durchlaufabschnitte (10) haben.

24. Aufhängung nach Patentanspruch 23, **dadurch gekennzeichnet, dass** die Durchlaufabschnitte (10) unterschiedliche Formen haben.

25. Aufhängung nach Patentanspruch 23, **dadurch gekennzeichnet, dass** die Durchlaufabschnitte (10) unterschiedliche Grössen haben.

26. Aufhängung nach Patentanspruch 22, **dadurch gekennzeichnet, dass** die Durchlassöffnungen (9) durch unterschiedliche Abstände voneinander getrennt sind.

27. Aufhängung nach einem der vorstehenden Patentansprüche von 19 bis 26, **dadurch gekennzeichnet, dass** die Durchlassöffnungen (9) an wenigstens eine Durchlaufleitung (6) in dem Verschluss (7) angeschlossen sind.

28. Aufhängung nach einem der vorstehenden Patentansprüche von 19 bis 27, **dadurch gekennzeichnet, dass** der Verschluss (7) einen länglichen Körper (14) hat, welcher in einer passrechten Führung (13) enthalten und mit dieser verbunden ist, und zwar auf solche Weise, dass der Verschluss in dieser gleitet und mit der Führung eine luftabdichtende Dichtung bildet.

29. Aufhängung nach Patentanspruch 28, **dadurch gekennzeichnet, dass** der längliche Körper (14) und die Führung (13) zylindrisch sind.

30. Aufhängung nach Patentanspruch 27, **dadurch gekennzeichnet, dass** die Durchlaufleitung (6) oder die Leitungen zwischen dem länglichen Körper (14) und der Führung (13) angeordnet sind.

31. Aufhängung nach einem der vorstehenden Patentansprüche von 19 bis 30, bei welcher der Kolben (3) an einem Trägerschaft (15) montiert ist, wobei die Aufhängung **dadurch gekennzeichnet ist, dass** die Öffnungen (9), die Durchlaufleitungen (6) und der Verschluss (7) in den Schaft (15) des Kolbens (3) eingearbeitet sind.

32. Aufhängung nach Patentanspruch 19, **dadurch gekennzeichnet, dass** die Antriebsmittel des Verschlusses (7) durch einen Luftdruck (8) in der pneumatischen Feder gebildet sind.

33. Aufhängung nach Patentanspruch 31, **dadurch gekennzeichnet, dass** die Antriebsmittel aus einer hydraulischen Flüssigkeit bestehen, zugeführt an den Verschluss (7) durch den Schaft (15), an welchem der Kolben (3) montiert ist.

34. Aufhängung nach Patentanspruch 31, **dadurch gekennzeichnet, dass** die Antriebsmittel aus einer in dem Schaft (15) des Kolbens (3) liegenden Welle (52) bestehen, wobei diese auf solche Weise bewegt wird, dass sie den Verschluss (7) betätigt und dessen Position verändert.

35. Aufhängung nach Patentanspruch 34, **dadurch gekennzeichnet, dass** die Welle (52) durch einen mechanischen Antrieb bewegt wird.

36. Aufhängung nach Patentanspruch 34, **dadurch gekennzeichnet, dass** die Welle (52) durch einen elektrischen Antrieb bewegt wird.

## Revendications

1. Un amortisseur réglable pour suspensions de véhicule, lesdites suspensions comprenant au moins un ressort pneumatique, l'amortisseur comprenant un piston (3), à travers lequel passe au moins un conduit, ledit conduit étant pourvu de soupapes à ruban, et un cylindre (4) relié au piston (3) de manière à ce qu'ils délimitent ensemble deux chambres de fluide distinctes (5a, 5b), lesdites chambres communiquant entre elles par l'intermédiaire du piston (3) et d'un conduit de transfert (6), ce dernier étant intercepté par un obturateur (7) qui se meut sur commande de moyens d'actionnement sensibles à une action de pilotage externe, où le conduit de transfert (6) est relié aux chambres (5a, 5b) par au moins deux lumières (9), les lumières étant positionnées par rapport au conduit de transfert (6) de manière à être recouvertes par l'obturateur (7), ledit obturateur (7) interagissant avec les lumières (9) de manière à délimiter avec ces dernières des sections de transit (10) pour le fluide passant entre une chambre (5a) et l'autre (5b) à travers le conduit de transfert (6), les sections étant variables selon la pression de commande (8), ledit amortisseur étant **caractérisé en ce que** la pression de commande (8) qui pilote la position de l'obturateur (7) est la pression réelle du ressort pneumatique, c'est-à-dire la pression de service établie par la soupape d'égalisation de la charge pilotant la pression d'air dans le ressort pneumatique et la régulant de façon appropriée en fonction des charges présentes sur les véhicules.

2. L'amortisseur selon la revendication 1, **caractérisé en ce que** les lumières de transfert (9) sont disposées et dimensionnées de manière à rendre possible des flux de transfert qui correspondent à une famille de courbes caractéristiques (11), chaque courbe ayant une évolution différente des autres.

3. L'amortisseur selon la revendication 1, **caractérisé en ce que** les lumières de transfert (9) sont conformées de manière à créer des sections de transit (10) qui varient par quantités discrètes.

4. L'amortisseur selon la revendication 1, **caractérisé en ce que** les lumières de transfert (9) sont inclinées transversalement à la direction de mouvement (12) de l'obturateur (7).

5. L'amortisseur selon l'une quelconque des revendications précédentes de 1 à 4, **caractérisé en ce que** les lumières de transfert (9) ont des sections de transit (10) différentes.

6. L'amortisseur selon la revendication 5, **caractérisé en ce que** les sections de transit (10) ont des formes différentes.

7. L'amortisseur selon la revendication 5, **caractérisé en ce que** les lumières de transfert (9) sont de tailles différentes.

8. L'amortisseur selon la revendication 5, **caractérisé en ce que** les lumières de transfert (9) sont séparées par des distances variables.

9. L'amortisseur selon une des revendications précédentes de 1 à 8, **caractérisé en ce que** les lumières de transfert (9) sont reliées au moins à un conduit de transfert (6) prévu dans l'obturateur (7).

10. L'amortisseur selon une des revendications précédentes de 1 à 9, **caractérisé en ce que** l'obturateur (7) présente un corps allongé (14) qui est contenu dans un guide complémentaire (13) et coaxialement accouplé à ce dernier de manière à pouvoir coulisser et former un joint étanche à l'air.

11. L'amortisseur selon la revendication 10, **caractérisé en ce que** le corps allongé (14) et le guide complémentaire (13) sont cylindriques.

12. L'amortisseur selon la revendication 10, **caractérisé en ce que** le conduit ou les conduits (6) de transfert sont placés entre le corps allongé (14) et le guide (13).

13. L'amortisseur selon une des revendications précédentes de 1 à 12, dans lequel le piston (3) est monté sur une tige de support (15), ledit amortisseur étant **caractérisé en ce que** les lumières (9), les conduits de transfert (6) et l'obturateur (7) sont incorporés dans la tige (15) du piston (3).

14. L'amortisseur selon la revendication 1, **caractérisé en ce que** les moyens d'actionnement de l'obturateur (7) sont constitués par une pression d'air (8).

15. L'amortisseur selon la revendication 13, **caractérisé en ce que** les moyens d'actionnement sont constitués par un fluide hydraulique alimenté à l'obturateur (7) à travers la tige (15) sur laquelle est monté le piston (3).

16. L'amortisseur selon la revendication 13,
**caractérisé en ce que** les moyens d'actionnement sont constitués par un arbre (52) logé dans la tige (15) et mû de manière à commander l'obturateur (7) et à en faire varier la position.

17. L'amortisseur selon la revendication 16, **caractérisé en ce que** l'arbre (52) est mû par un actionnement mécanique.

18. L'amortisseur selon la revendication 16, **caractérisé en ce que** l'arbre (52) est mû par un actionnement électrique.

19. Une suspension pneumatique pour véhicules comprenant un ressort pneumatique alimenté avec de l'air comprimé (8); un amortisseur (2) à fluide selon la revendication 1, **caractérisée en ce que** les soupapes à ruban sont des soupapes d'amortissement (51) et **en ce que** la pression de commande (8) est variable selon la pression d'air (8) présente dans le ressort pneumatique.

20. La suspension selon la revendication 19, **caractérisée en ce que** les lumières de transfert (9) sont disposées et dimensionnées de manière à rendre possible, aux différentes valeurs de pression (8), des flux de transfert qui correspondent à une famille de courbes caractéristiques (11), chaque courbe ayant une évolution différente des autres.

21. La suspension selon la revendication 19 ou 20, **caractérisée en ce que** les lumières (9) sont conformées de manière à créer des sections de transit (10) pour le transfert du fluide, qui varient par quantités discrètes.

22. La suspension selon la revendication 19, **caractérisée en ce que** les lumières de transfert (9) sont inclinées transversalement à la direction de mouvement (12) de l'obturateur (7).

23. La suspension selon une des revendications précédentes de 19 à 22, **caractérisée en ce que** les lumières de transfert (9) ont des sections de transit (10) différentes.

24. La suspension selon la revendication 23, **caractérisée en ce que** les sections de transit (10) ont des formes différentes.

25. La suspension selon la revendication 23, **caractérisée en ce que** les sections de transit (10) sont de tailles différentes.

26. La suspension selon la revendication 22, **caractérisée en ce que** les lumières de transfert (9) sont séparées par des distances variables.

27. La suspension selon une des revendications précédentes de 19 à 26, **caractérisée en ce que** les lumières de transfert (9) sont reliées au moins à un conduit de transfert (6) prévu dans l'obturateur (7).

28. La suspension selon une des revendications précédentes de 19 à 27, **caractérisée en ce que** l'obturateur (7) présente un corps allongé (14) qui est contenu dans un guide complémentaire (13) et accouplé avec ce dernier de manière à ce que l'obturateur lui-même puisse coulisser et former un joint étanche à l'air avec le guide.

29. La suspension selon la revendication 28, **caractérisée en ce que** le corps allongé (14) et le guide (13) sont cylindriques.

30. La suspension selon la revendication 27, **caractérisée en ce que** le conduit ou les conduits (6) de transfert sont placés entre le corps allongé (14) et le guide (13).

31. La suspension selon une des revendications précédentes de 19 à 30, dans laquelle le piston (3) est monté sur une tige de support (15), ladite suspension étant **caractérisée en ce que** les lumières (9), les conduits de transfert (6) et l'obturateur (7) sont incorporés dans la tige (15) du piston (3).

32. La suspension selon la revendication 19, **caractérisée en ce que** les moyens d'actionnement de l'obturateur (7) sont constitués par la pression d'air (8) présente dans le ressort pneumatique.

33. La suspension selon la revendication 31, **caractérisée en ce que** les moyens d'actionnement sont constitués par un fluide hydraulique alimenté à l'obturateur (7) à travers la tige (15) sur laquelle est monté le piston (3).

34. La suspension selon la revendication 31, **caractérisée en ce que** les moyens d'actionnement sont constitués par un arbre (52) logé dans la tige (15) du piston (3) et mû de manière à commander l'obturateur (7) et à en faire varier la position.

35. La suspension selon la revendication 34, **caractérisée en ce que** l'arbre (52) est mû par un actionnement mécanique.

36. La suspension selon la revendication 34, **caractérisée en ce que** l'arbre (52) est mû par un actionnement électrique.
